# EUROPÄISCHE PATENTSCHRIFT

(11) **EP 3 453 226 B1**
(45) Veröffentlichungstag und Bekanntmachung des Hinweises auf die Patenterteilung: **08.07.2020**
(21) Anmeldenummer: 17718944.6
(22) Anmeldetag: 25.04.2017
(51) Int. Cl.: H05B 45/20

(54) **BELEUCHTUNGSVORRICHTUNG**
ILLUMINATION DEVICE
DISPOSITIF D'ÉCLAIRAGE

(30) Priorität: 04.05.2016 DE 102016207727
(43) Veröffentlichungstag der Anmeldung: 13.03.2019
(73) Patentinhaber: Bayerische Motoren Werke Aktiengesellschaft, 80809 München (DE)
(72) Erfinder: ISELE, Robert, 82256 Fuerstenfeldbruck (DE); ALTINGER, Florian, 110001 Shenyang/Heping District (CN); BRUEGL, Juergen, 81669 München (DE)
(86) Internationale Anmeldenummer: PCT/EP2017/059749
(87) Internationale Veröffentlichungsnummer: WO 2017/190979

(56) Entgegenhaltungen:
- WO-A1-2004/086822
- WO-A1-2004/086822
- US-A1- 2010 259 198
- US-A1- 2010 259 198
- US-A1- 2012 306 370
- US-A1- 2012 306 370
- US-B1- 8 624 527

## Beschreibung

Die Erfindung betrifft eine Beleuchtungsvorrichtung, insbesondere für ein Kraftfahrzeug.

Aus dem Stand der Technik ist es bekannt, für Beleuchtungsvorrichtungen in Kraftfahrzeugen Mehrfarb-LED-Einheiten zu verwenden. Diese LED-Einheiten umfassen mehrere Einfarb-LEDs und werden in der Regel mit LED-Treibern angesteuert, um die Helligkeit und den Farbort (d.h. die Mischfarbe) zu variieren. Hierzu wird ein Modul mit einem Mikroprozessor verwendet, der zum einen eine Kommunikation mit einem Kraftfahrzeug-Datenbus übernimmt und zum anderen die LED-Einheiten treibt, üblicherweise über PWM-Ausgänge. Als Kraftfahrzeug-Datenbus kommt dabei häufig der sog. LIN-Bus (LIN = Local Interconnect Network) zum Einsatz.

Aus dem Stand der Technik sind ferner neuartige Mehrfarb-LED-Einheiten bekannt, die über eine integrierte Schaltung verfügen. Bei diesen LED-Einheiten sind die Einfarb-LEDs und die integrierte Schaltung in einem gemeinsamen Gehäuse untergebracht, wodurch eine hohe Packungsdichte erreicht werden kann. Die einzelnen LED-Einheiten werden über einen Datenstrom gesteuert.

Bis dato werden Parametrisierungen, die in Beleuchtungsvorrichtungen mit Mehrfarb-LED-Einheiten zum Betrieb der einzelnen LED-Einheiten benötigt werden, in einem zentralen Verarbeitungsmodul hinterlegt. Dies hat den Nachteil, dass lokal unterschiedliche Betriebsbedingungen der einzelnen LED-Einheiten nur unzureichend kompensiert werden, was zu einem uneinheitlichen Erscheinungsbild der Beleuchtungsvorrichtung führen kann.

Die Druckschrift WO 2014/067830 A1 offenbart ein Verfahren und eine Anordnung zur temperaturkorrigierten Steuerung von LEDs mittels Look-up-Tabellen. Dabei ist in einem LED-Modul aus mehreren LED-Kanälen für jeden Zielfarbort, der durch das LED-Modul erreichbar ist, eine Look-up-Tabelle vorgesehen, in welcher der Betriebsstrom für jeden LED-Kanal abgelegt ist. Eine Ausgestaltung des LED-Moduls als einzelnes Halbleiterbauelement mit darin enthaltener temperaturkorrigierter Steuerung kann dieser Druckschrift nicht entnommen werden.

Die Druckschrift US 2010/0259198 A1 offenbart ein Verfahren zur Einstellung eines Farborts in einem Leuchtmodul in Abhängigkeit von einer ermittelten Temperatur. Im Rahmen dieser Einstellung wird auch auf Kalibrierdaten zurückgegriffen.

In der Druckschrift WO 2004/086822 A1 ist ein Kraftfahrzeugleuchtenmodul offenbart, das einzelne LEDs als Leuchtmittel und Sensoren zur Erfassung äußeren und/oder innerer Einflüsse beim Betrieb des LEDs und/oder fertigungsbedingter Eigenschaften der LEDs umfasst. Die LEDs werden in Abhängigkeit von den erfassten Einflüssen bzw. Eigenschaften über eine Mikrocontroller-Schaltung gesteuert.

Aufgabe der Erfindung ist es, eine Beleuchtungsvorrichtung aus mehreren Mehrfarb-LED-Einheiten mit einem verbesserten Erscheinungsbild zu schaffen.

Diese Aufgabe wird durch die Beleuchtungsvorrichtung gemäß Patentanspruch 1 gelöst. Weiterbildungen der Erfindung sind in den abhängigen Ansprüchen definiert.

Die erfindungsgemäße Beleuchtungsvorrichtung ist vorzugsweise für ein Kraftfahrzeug vorgesehen, wie z.B. einen PKW und gegebenenfalls auch einen LKW. Die Beleuchtungsvorrichtung umfasst mehrere Mehrfarb-LED-Einheiten mit jeweils einstellbarem Farbort und einstellbarer Helligkeit (d.h. Lichtintensität). Der Begriff des Farborts ist dem Fachmann hinlänglich bekannt und beschreibt die Mischfarbe, welche durch die jeweilige Mehrfarb-LED-Einheit erzeugt wird. Der Farbort kann beispielsweise als Ort in einem Farbdiagramm, insbesondere in einem Farbdiagramm des CIE-Normenvalenzsystems, angegeben werden.

In der erfindungsgemäßen Beleuchtungsvorrichtung ist jede Mehrfarb-LED-Einheit ein einzelnes Halbleiterbauelement mit mehreren und vorzugsweise mindestens drei Einfarb-LEDs unterschiedlicher Farbe. Das einzelne Halbleiterbauelement umfasst ferner einen Mikrocontroller. Die Einfarb-LEDs und der Mikrocontroller jeder Mehrfarb-LED-Einheit sind von einem entsprechenden Gehäuse des Halbleiterbauelements umgeben, d.h. sie sind in einem gemeinsamen Gehäuse des Halbleiterbauelements untergebracht. In der erfindungsgemäßen Beleuchtungsvorrichtung ist der Mikrocontroller dazu eingerichtet, jede Einfarb-LED einer jeweiligen Mehrfarb-LED-Einheit derart in Abhängigkeit von einem aktuellen (d.h. gerade vorliegenden) Temperaturwert der jeweiligen Mehrfarb-LED-Einheit anzusteuern, dass ein eingestellter Farbort und eine eingestellte Helligkeit im Betrieb der jeweiligen Mehrfarb-LED-Einheit konstant gehalten werden.

Die erfindungsgemäße Beleuchtungsvorrichtung weist den Vorteil auf, dass ein Algorithmus zur Temperaturkompensation in einem Mikrocontroller integriert ist, der Bestandteil eines einzelnen Halbleiterbauelements der Mehrfarb-LED-Einheit ist. Auf diese Weise kann individuell und hochgenau unter Berücksichtigung von lokalen Temperaturen der einzelnen Mehrfarb-LED-Einheiten eine erwünschte Helligkeit bzw. ein erwünschter Farbort eingestellt werden, wodurch ein gleichbleibendes Erscheinungsbild der Beleuchtungsvorrichtung erreicht wird.

In einer bevorzugten Variante ist der Mikrocontroller der jeweiligen Mehrfarb-LED-Einheit dazu eingerichtet, jede Einfarb-LED basierend auf der Steuerung des Betriebsstroms der jeweiligen Einfarb-LED anzusteuern, beispielsweise über Pulsweitenmodulation.

In einer besonders bevorzugten Ausführungsform ist im Halbleiterbauelement zumindest eines Teils der Mehrfarb-LED-Einheiten ein Temperatursensor integriert, der dazu eingerichtet ist, den aktuellen Temperaturwert der jeweiligen Mehrfarb-LED-Einheit zu messen. Hierdurch wird die aktuelle Temperatur der Mehrfarb-LED-Einheit besonders exakt ermittelt.

In einer weiteren Variante wird auf einen Temperatursensor zur Messung des aktuellen Temperaturwerts verzichtet. Stattdessen ist der Mikrocontroller zumindest eines Teils der Mehrfarb-LED-Einheiten dazu eingerichtet, den Temperaturwert basierend auf zumindest einem Teil der Betriebsspannungen und/oder Betriebsströme der Einfarb-LEDs der jeweiligen Mehrfarb-LED-Einheit zu ermitteln.

Vorzugsweise erfolgt die obige Ermittlung des aktuellen Temperaturwerts basierend auf Tabellen bzw. Kennlinien. Im Unterschied zu einer Tabelle beschreibt eine Kennlinie einen kontinuierlichen Zusammenhang zwischen mehreren Variablen. Zur Realisierung einer solchen Ausführungsform sind in dem Mikrocontroller zumindest eines Teils der Mehrfarb-LED-Einheiten für eine jeweilige Einfarb-LED zumindest eines Teils der Einfarb-LEDs der jeweiligen Mehrfarb-LED-Einheit Kennlinien oder Tabellen hinterlegt, wobei eine jeweilige Kennlinie bzw. Tabelle für einen Betriebsstrom der jeweiligen Einfarb-LED spezifisch ist. Mit anderen Worten existieren mehrere Kennlinien für verschiedene einstellbare Betriebsströme. Die jeweilige Kennlinie bzw. Tabelle spezifiziert in Abhängigkeit von der Betriebsspannung der jeweiligen Einfarb-LED eine Temperatur. Der Mikrocontroller ist dabei dazu eingerichtet, aus der Kennlinie oder Tabelle für den aktuellen Betriebsstrom, der in der jeweiligen Einfarb-LED eingestellt ist, die Temperatur für die aktuelle Betriebsspannung, welche mit einem geeigneten Sensor messbar ist, auszulesen und basierend auf der oder den ausgelesenen Temperaturen den aktuellen Temperaturwert zu ermitteln. Sollten dabei Temperaturwerte von mehreren bzw. allen Einfarb-LEDs der entsprechenden Mehrfarb-LED-Einheit ermittelt werden, kann beispielsweise als aktueller Temperaturwert der Mittelwert aus diesen ausgelesenen Temperaturen verwendet werden.

In einer weiteren bevorzugten Variante der erfindungsgemäßen Beleuchtungsvorrichtung ist der Mikrocontroller zumindest eines Teils der Mehrfarb-LED-Einheiten derart ausgestaltet, dass er im Falle, dass der aktuelle Temperaturwert eine vorgegebene Schwelle überschreitet, die Helligkeit der jeweiligen Mehrfarb-LED-Einheit (d.h. der Mehrfarb-LED-Einheit, zu der der Mikrocontroller gehört) verringert. Hierdurch wird sichergestellt, dass die Mehrfarb-LED-Einheit aufgrund zu hoher Temperaturen beschädigt wird. Vorzugsweise kann dabei ein Zusammenhang vorgegeben sein, gemäß dem die Helligkeit der Mehrfarb-LED-Einheit umso stärker vermindert wird, je mehr die vorgegebene Schwelle überschritten wird. Gegebenenfalls kann die Helligkeit der Mehrfarb-LED-Einheit auch auf null herabgesetzt werden, d.h. die entsprechende Mehrfarb-LED-Einheit ausgeschaltet werden. Dies kann beispielsweise durch eine zweite Schwelle erreicht werden, die höher als die vorgegebene Schwelle ist. Sollte die aktuelle Temperatur diese zweite Schwelle überschreiten, wird die Mehrfarb-LED-Einheit abgeschaltet.

In einer besonders bevorzugten Ausführungsform umfasst die erfindungsgemäße Beleuchtungsvorrichtung mehrere Mehrfarb-LED-Einheiten, welche an einen internen Datenbus (d.h. einen Datenbus innerhalb der Beleuchtungsvorrichtung) angeschlossen sind. Dieser interne Datenbus ist wiederum an ein Verarbeitungsmodul gekoppelt, wobei das Verarbeitungsmodul dazu eingerichtet ist, interne Steuerbefehle zur Einstellung der Helligkeit und des Farborts der einzelnen Mehrfarb-LED-Einheiten auf den internen Datenbus zu geben. Vorzugsweise ist das obige Verarbeitungsmodul dazu eingerichtet, externe Steuerbefehle von einem Kraftfahrzeug-Datenbus zu empfangen und in die obigen internen Steuerbefehle zu wandeln.

In der soeben beschriebenen Ausführungsform wird eine einfache Ansteuerung der einzelnen Mehrfarb-LED-Einheiten über einen internen Datenbus erreicht. Der interne Datenbus kann z.B. ein SPI-Datenbus (SPI = Serial Protocol Interface) sein oder gegebenenfalls auch ein anderer Datenbus, wie z.B. ein differentieller Datenbus, der digitale Daten über eine Spannungsdifferenz zwischen zwei Leitungen codiert. Der obige Kraftfahrzeug-Datenbus kann beispielsweise ein LIN-Bus (LIN = Local Interconnect Network) oder auch ein CAN-Bus (CAN = Controller Area Network) sein.

In einer weiteren bevorzugten Ausführungsform umfasst zumindest ein Teil der Mehrfarb-LED-Einheiten eine oder mehrere RGB-LED-Einheiten und/oder RGBW-LED-Einheiten. Eine RGB-LED-Einheit umfasst in an sich bekannter Weise eine rote, grüne und blaue Einfarb-LED und eine RGBW-LED-Einheit umfasst zusätzlich zu einer roten, grünen und blauen LED auch eine Weißlicht-LED.

In einer besonders bevorzugten Ausführungsform ist die Beleuchtungsvorrichtung eine Innenraumbeleuchtung in einem Kraftfahrzeug oder gegebenenfalls auch eine Außenbeleuchtung an der Außenseite des Kraftfahrzeugs. Hierdurch können ansprechende Lichteffekte mit einem homogenen Erscheinungsbild generiert werden.

Neben der oben beschriebenen Beleuchtungsvorrichtung betrifft die Erfindung ein Kraftfahrzeug, insbesondere einen PKW oder gegebenenfalls auch einen LKW, das eine oder mehrere der erfindungsgemäßen Beleuchtungsvorrichtungen bzw. von bevorzugten Varianten dieser Beleuchtungsvorrichtungen umfasst.

Ein Ausführungsbeispiel der Erfindung wird nachfolgend anhand der beigefügten Figuren detailliert beschrieben.

Es zeigen:
- Fig. 1: eine schematische Darstellung einer Ausführungsform einer erfindungsgemäßen Beleuchtungsvorrichtung; und
- Fig. 2: eine Detailansicht einer LED-Einheit aus Fig. 1.

Im Folgenden wird eine Ausführungsform der Erfindung anhand einer Beleuchtungsvorrichtung beschrieben, welche in einem Kraftfahrzeug als Innenbeleuchtung verbaut ist und als Leuchtmittel eine Vielzahl von auf einem Band angeordneten Mehrfarb-LED-Einheiten 3 umfasst. Diese Mehrfarb-LED-Einheiten, welche nachfolgend auch einfach als LED-Einheiten bezeichnet werden, stellen jeweils ein einzelnes Halbleiterbauelement mit mehreren Einfarb-LEDs 301 bis 304 und einem Mikrocontroller 4 dar. Die Einfarb-LEDs und der Mikrocontroller sind in einem gemeinsamen Gehäuse des Halbleiterbauelements integriert. Die Einfarb-LED 301 ist eine rote LED, die Einfarb-LED 302 eine grüne LED, die Einfarb-LED 303 eine blaue LED und die Einfarb-LED 304 eine weiße LED. Mit den bandförmig angeordneten LED-Einheiten kann eine sehr hohe Packungsdichte erreicht werden (je nach Gehäuseform von 144 bis 367 LEDs/m).

Die einzelnen LED-Einheiten 3 werden über einen digitalen Datenstrom in der Form eines Bitstroms angesteuert, der mittels eines internen Datenbusses 2 (d.h. eines intern in der Beleuchtungsvorrichtung vorgesehenen Datenbusses) den einzelnen LED-Einheiten zugeführt wird. Der interne Datenbus umfasst eine Leitung CL für den Takt und einer Leitung DL für den Bitstrom.

Die Signale auf dem internen Datenbus 2 stammen von einem Verarbeitungsmodul 1, das an einen LIN-Bus 6 des Kraftfahrzeugs gekoppelt ist. Das Verarbeitungsmodul umfasst einen LIN-Transceiver 101, der entsprechende digitale Signale zur Ansteuerung der LED-Einheiten 3 vom LIN-Bus 6 abgreift, sowie ein Mikroprozessor 102, der die abgegriffenen Signale in entsprechende Datensignale auf der Datenleitung DL wandelt. Die auf dem LIN-Bus 6 übertragenen Signale umfassen dabei Signale, welche für die Beleuchtungsvorrichtung bestimmt sind und ein für die Beleuchtungsvorrichtung einzustellendes Lichtmuster festlegen. Diese Signale stammen wiederum von einem Steuergerät des Kraftfahrzeugs, welches beispielsweise basierend auf einer Eingabe des Fahrers das zu generierende Lichtmuster festlegt und als entsprechendes Signal auf den LIN-Bus gibt. Über das Verarbeitungsmodul 1 wird erkannt, ob das Lichtmuster entsprechend dem aktuellen Signal auf dem LIN-Bus 6 für die Beleuchtungsvorrichtung vorgesehen ist. Ist dies der Fall, wird dieses Signal mittels des Mikroprozessors 102 in ein entsprechendes Signal für den internen Datenbus 2 umgesetzt.

Der interne Datenbus 2 kann z.B. ein SPI-Bus sein. Vorzugsweise werden dabei die Signale für den SPI-Bus von dem Mikroprozessor 102 mittels Software-SPI erzeugt. Software-SPI ist an sich aus dem Stand der Technik bekannt und stellt eine Programmbibliothek dar, mit der beliebige freie Pins des Mikroprozessors 102 zur Signalabgabe auf den SPI-Bus genutzt werden können. Alternativ kann jedoch auch Hardware-SPI eingesetzt werden. Dabei sind spezielle SPI-Pins zur Signalabgabe auf den SPI-Bus vorgesehen. Die Verwendung von Software-SPI hat den Vorteil, dass in dem internen Datenbus 2 mehrere Leitungen DL und CL zur Ansteuerung einer größeren Anzahl von LED-Einheiten 3 vorgesehen sein können. Der interne Datenbus kann als Alternative zu einem SPI-Bus auch als differentieller Datenbus oder als beliebig anderer Datenbus ausgestaltet sein. Ein differentieller Datenbus zeichnet sich dadurch aus, dass er digitale Daten über eine Spannungsdifferenz zwischen zwei Leitungen codiert.

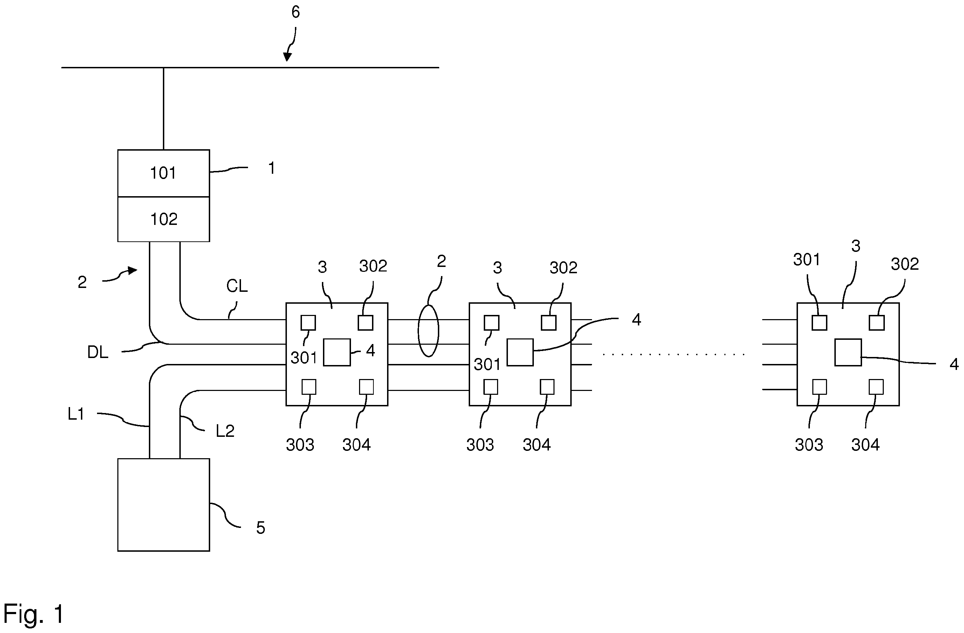

In der Ausführungsform der Fig. 1 sind neben den Leitungen CL und DL zwei Stromleitungen L1 und L2 vorgesehen, welche an eine Gleichspannungsversorgung 5 angeschlossen sind. Basierend auf dem über die Datenleitung DL empfangenen Bitstrom erfolgt eine PWM-Modulation des den einzelnen LEDs 301 bis 304 zugeführten Stroms, um hierdurch die LEDs entsprechend dem Bitstrom auf der Datenleitung DL anzusteuern.

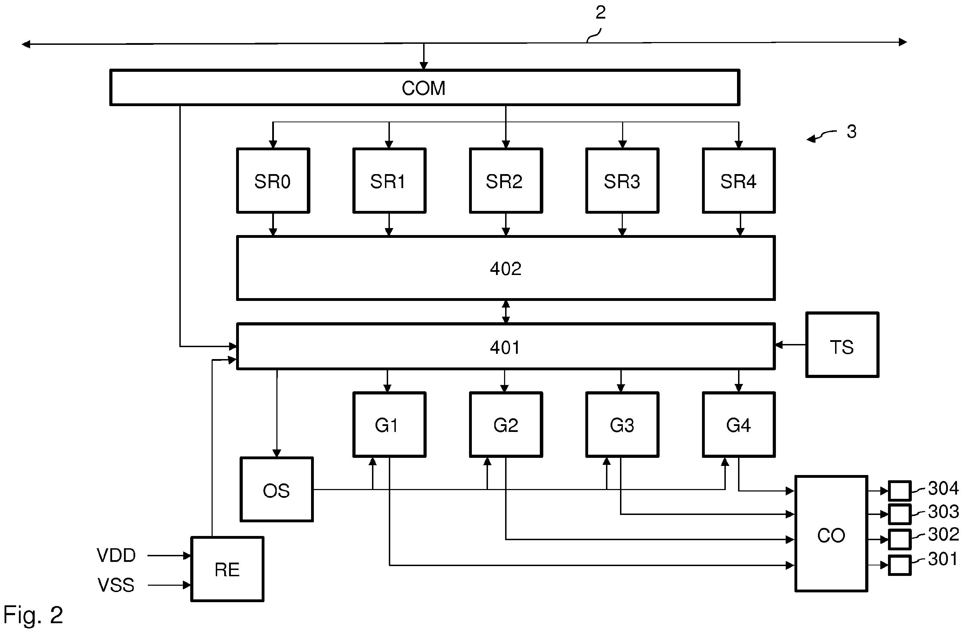

Der Aufbau einer einzelnen LED-Einheit 3 aus Fig. 1 ist im Detail in Fig. 2 gezeigt. Alle dargestellten Komponenten der LED-Einheit sind dabei in einem einzelnen Halbleiterbauelement integriert. Die Signale des Datenbusses 2 werden über eine Kommunikationsschnittstelle COM der LED-Einheit 3 empfangen. Das Taktsignal der Taktleitung CL wird an den weiter unten beschriebenen Mikroprozessor 401 weitergeleitet, wohingegen der Datenstrom der Datenleitung DL nach Decodierung in der Kommunikationsschnittstelle COM auf 8-Bit-Schieberegister SR0, SR1, SR2, SR3 und SR4 gegeben wird. Der vom Schieberegister SR0 ausgegebene Wert zeigt dabei die gewünschte Gesamthelligkeit der LED-Einheit an, wohingegen über die Werte der Schieberegister SR1 bis SR4 die Farbanteile der einzelnen Einfarb-LEDs zur Erzeugung der gewünschten Mischfarbe ausgegeben werden. Insbesondere wird über das Schieberegister SR1 der Farbanteil der roten LED 301, über das Schieberegister SR2 der Farbanteil der grünen LED 302, über das Schieberegister 303 der Farbanteil der blauen LED 303 und über das Schieberegister 304 der Farbanteil der weißen LED 304 ausgegeben.

Die Werte der einzelnen Schieberegister werden dem Mikrocontroller 4 zugeführt, der aus einer Logik bzw. einem Mikroprozessor 401 sowie einem zugeordneten nichtflüchtigen EEPROM-Speicher 402 besteht. In diesem Speicher sind unter anderem Kalibrierungsdaten hinterlegt, die aus einem Kalibriervorgang der LED-Einheit stammen und für einen vorgegebenen Standard-Temperaturwert der LED-Einheit festlegen, wie die Betriebsströme der einzelnen Einfarb-LEDs einzustellen sind, damit der aus dem Schieberegister SR0 stammende Gesamthelligkeitswert sowie die Farbmischung (d.h. der diesbezügliche Farbort) entsprechend den Werten aus den Schieberegistern SR1 bis SR4 erreicht werden.

Der Mikroprozessor 401 greift auf die im Speicher 402 hinterlegten Werte zurück und empfängt ferner den aktuellen Temperaturwert eines Temperatursensors TS, der im Halbleiterbauelement der LED-Einheit integriert ist. Im Mikroprozessor ist dabei ein Temperatur-Algorithmus hinterlegt, der unter Zugriff auf den Speicher 402 die entsprechenden Betriebsströme für den oben genannten Standard-Temperaturwert bestimmt und diese Betriebsströme bei Abweichung des vom Temperatursensor TS stammenden aktuellen Temperaturwerts von dem Standard-Temperaturwert geeignet korrigiert. Die Korrektur ist dabei derart ausgestaltet, dass die erwünschte Helligkeit und der erwünschte Farbort entsprechend den Werten aus den Schieberegistern auch bei Temperaturschwankungen richtig eingestellt werden.

In dem Temperatur-Algorithmus des Mikroprozessors 401 wird somit die Tatsache berücksichtigt, dass die Temperatur der LED-Einheit 3 Auswirkungen auf deren Betrieb hat, so dass zur Erreichung einer erwünschten Helligkeit und eines erwünschten Farborts eine temperaturabhängige Korrektur durchgeführt werden muss. Entsprechende Algorithmen zur Temperaturkompensation sind an sich aus dem Stand der Technik bekannt. Erstmalig wird ein solcher Algorithmus jedoch in einem Mikrocontroller hinterlegt, der Bestandteil des Halbleiterbauelements einer LED-Einheit ist. Auf diese Weise kann der Betrieb der einzelnen Mehrfarb-LED-Einheiten in einer Beleuchtungsvorrichtung individuell und sehr genau an die aktuelle Temperatur angepasst werden.

Die Betriebsströme für die einzelnen LEDs 301 bis 304 werden über einen Spannungsregler RE bereitgestellt, der aus der in Fig. 1 gezeigten Spannungsversorgung 5 die positive Spannung VDD und die negative Spannung VSS erhält. Der Mikroprozessor 401 erzeugt ferner einen Takt für einen entsprechenden Oszillator OS, der PWM-Generatoren G1, G2, G3 und G4 zugeführt wird. Die Betriebsströme der einzelnen LEDs 301 bis 304 werden in den Generatoren G1 bis G4 über Pulsweitenmodulation erzeugt. Die aus dem Algorithmus zur Temperaturkompensation stammenden Werte der Betriebsströme werden von dem Mikroprozessor 401 an die einzelnen Generatoren G1 bis G4 gegeben. Der Generator G1 erzeugt mittels Pulsweitenmodulation den Strom für die rote LED 301, der Generator G2 den Strom für die grüne LED 302, der Generator G3 den Strom für die blaue LED 303 und der Generator G4 den Strom für die weiße LED 304. Über die von den einzelnen Generatoren erzeugten PWM-Signale, die über den Stromausgang CO zu den Einfarb-LEDs gelangen, wird dann für LED-Einheit 3 das entsprechende Licht mit der gewünschten Helligkeit und dem gewünschten Farbort gemäß dem Signal eingestellt, das über den internen Datenbus 2 zu der LED-Einheit gelangt.

In der soeben beschriebenen Ausführungsform wurde der aktuelle Temperaturwert durch einen Temperatursensor TS auf dem Halbleiterbauelement der LED-Einheit 3 gemessen. Gegebenenfalls besteht auch die Möglichkeit, dass anstatt der Messung eines Temperaturwerts die aktuelle Temperatur über Kennlinien ermittelt wird, welche für jeweilige Betriebsströme einen Zusammenhang zwischen der Betriebsspannung der einzelnen Einfarb-LEDs und der Temperatur der LED-Einheit angeben. Die Betriebsspannung kann dabei durch einen geeigneten Spannungssensor in der LED-Einheit gemessen werden. Eine solche Art der Temperaturermittlung ist dem Fachmann geläufig und wird beispielsweise in der Druckschrift US 2015/0002023 A1 beschrieben.

Die im Vorangegangenen beschriebenen Ausführungsformen der Erfindung weisen eine Reihe von Vorteilen auf. Insbesondere wird erstmalig ein Algorithmus zur Temperaturkompensation in einem Halbleiterbauelement einer Mehrfarb-LED-Einheit integriert. Es wird somit eine integrierte Logik in einem Mehrfarb-LED-Modul genutzt, um hierüber eine Temperaturkompensation zu implementieren. Hierdurch können die gewünschte Helligkeit und der gewünschte Farbort individuell und hochgenau für jede LED-Einheit in Abhängigkeit von der Temperatur am Installationsort der jeweiligen LED-Einheit eingestellt werden. Auf diese Weise kann ein einheitliches Erscheinungsbild der LED-Einheit bzw. eines LED-Bands aus vielen LED-Einheiten über die gesamte Lebensdauer gewährleistet werden.

### Bezugszeichenliste

- 1: Verarbeitungsmodul
- 101: LIN-Transceiver
- 102: Mikroprozessor
- 2: interner Datenbus
- 3: Mehrfarb-LED-Einheiten
- 301, 302, 303, 304: Einfarb-LEDs
- 4: Mikrocontroller
- 401: Mikroprozessor
- 402: EEPROM
- 5: Spannungsversorgung
- 6: Kraftfahrzeug-Datenbus
- CL: Leitung für Taktsignal
- DL: Datenleitung
- L1, L2: Stromleitungen
- COM: Kommunikationsschnittstelle
- SR0, SR1, SR2, SR3, SR4: Schieberegister
- TS: Temperatursensor
- G1, G2, G3, G4: PWM-Generatoren
- OS: Oszillator
- RE: Spannungsregler
- VDD, VSS: Spannungen
- CO: Stromausgang

## Patentansprüche

1. Beleuchtungsvorrichtung, insbesondere für ein Kraftfahrzeug, umfassend mehrere Mehrfarb-LED-Einheiten (3) mit jeweils einstellbarem Farbort und einstellbarer Helligkeit, wobei jede Mehrfarb-LED-Einheit (3) ein einzelnes Halbleiterbauelement mit mehreren Einfarb-LEDs (301, 302, 303, 304) unterschiedlicher Farbe und einem Mikrocontroller (4) ist, **dadurch gekennzeichnet, dass** die Einfarb-LEDs (301, 302, 303, 304) und der Mikrocontroller (4) jeder Mehrfarb-LED-Einheit (3) von einem entsprechenden Gehäuse des Halbleiterbauelements umgeben sind, wobei der Mikrocontroller (4) dazu eingerichtet ist, jede Einfarb-LED (301, 302, 303, 304) einer jeweiligen Mehrfarb-LED-Einheit (3) derart in Abhängigkeit von einem aktuellen Temperaturwert der jeweiligen Mehrfarb-LED-Einheit (3) anzusteuern, dass ein eingestellter Farbort und eine eingestellte Helligkeit im Betrieb der jeweiligen Mehrfarb-LED-Einheit (3) konstant gehalten werden.

2. Beleuchtungsvorrichtung nach Anspruch 1, **dadurch gekennzeichnet, dass** der Mikrocontroller (4) zumindest eines Teils der Mehrfarb-LED-Einheiten (3) dazu eingerichtet ist, jede Einfarb-LED (301, 302, 303, 304) basierend auf der Steuerung des Betriebsstroms der jeweiligen Einfarb-LED (301, 302, 303, 304) anzusteuern.

3. Beleuchtungsvorrichtung nach Anspruch 1 oder 2, **dadurch gekennzeichnet, dass** im Halbleiterbauelement zumindest eines Teils der Mehrfarb-LED-Einheiten (3) ein Temperatursensor (TS) integriert ist, der dazu eingerichtet ist, den aktuellen Temperaturwert der jeweiligen Mehrfarb-LED-Einheit (3) zu messen.

4. Beleuchtungsvorrichtung nach einem der vorhergehenden Ansprüche, **dadurch gekennzeichnet, dass** der Mikrocontroller (4) zumindest eines Teils der Mehrfarb-LED-Einheiten (3) dazu eingerichtet ist, den aktuellen Temperaturwert basierend auf zumindest einem Teil der Betriebsspannungen und/oder Betriebsströme der Einfarb-LEDs (301, 302, 303, 304) der jeweiligen Mehrfarb-LED-Einheit (3) zu ermitteln.

5. Beleuchtungsvorrichtung nach Anspruch 4, **dadurch gekennzeichnet, dass** in dem Mikrocontroller (4) zumindest eines Teils der Mehrfarb-LED-Einheiten (3) für eine jeweilige Einfarb-LED (301, 302, 303, 304) zumindest eines Teils der Einfarb-LEDs (301, 302, 303, 304) der jeweiligen Mehrfarb-LED-Einheit (3) Kennlinien oder Tabellen hinterlegt sind, wobei eine jeweilige Kennlinie oder Tabelle für einen Betriebsstrom der jeweiligen Einfarb-LED (301, 302, 303, 304) spezifisch ist und in Abhängigkeit von der Betriebsspannung der jeweiligen Einfarb-LED (301, 302, 303, 304) eine Temperatur spezifiziert, wobei der Mikrocontroller (4) dazu eingerichtet ist, aus der Kennlinie oder Tabelle für den aktuellen Betriebsstrom der jeweiligen Einfarb-LED (301, 302, 303, 304) die Temperatur für die aktuelle Betriebsspannung der jeweiligen Einfarb-LED (301, 302, 303, 304) auszulesen und den aktuellen Temperaturwert basierend auf der oder den ausgelesenen Temperaturen zu ermitteln.

6. Beleuchtungsvorrichtung nach einem der vorhergehenden Ansprüche, **dadurch gekennzeichnet, dass** der Mikrocontroller (4) zumindest eines Teils der Mehrfarb-LED-Einheiten (3) derart ausgestaltet ist, dass er im Falle, dass der aktuelle Temperaturwert eine vorgegebene Schwelle überschreitet, die Helligkeit der Mehrfarb-LED-Einheit (6) verringert.

7. Beleuchtungsvorrichtung nach einem der vorhergehenden Ansprüche, **dadurch gekennzeichnet, dass** die Beleuchtungsvorrichtung mehrere Mehrfarb-LED-Einheiten (3) umfasst, welche an einen internen Datenbus (2) angeschlossen sind, der an ein Verarbeitungsmodul (1) gekoppelt ist, wobei das Verarbeitungsmodul (1) dazu eingerichtet ist, interne Steuerbefehle zur Einstellung der Helligkeit und des Farborts der einzelnen Mehrfarb-LED-Einheiten (3) auf den internen Datenbus (2) zu geben.

8. Beleuchtungsvorrichtung nach Anspruch 7, **dadurch gekennzeichnet, dass** das Verarbeitungsmodul (1) dazu eingerichtet ist, externe Steuerbefehle von einem Kraftfahrzeug- Datenbus (6) zu empfangen und in die internen Steuerbefehle zu wandeln.

9. Beleuchtungsvorrichtung nach einem der vorhergehenden Ansprüche, **dadurch gekennzeichnet, dass** zumindest ein Teil der Mehrfarb-LED-Einheiten (3) eine oder mehrere RGB-LED-Einheiten und/oder RGBW-LED-Einheiten umfasst.

10. Beleuchtungsvorrichtung nach einem der vorhergehenden Ansprüche, **dadurch gekennzeichnet, dass** die Beleuchtungsvorrichtung eine Innenraumbeleuchtung zur Anbringung in einem Kraftfahrzeug oder eine Außenbeleuchtung zur Anbringung an der Außenseite des Kraftfahrzeugs ist.

11. Kraftfahrzeug, umfassend eine oder mehrere Beleuchtungsvorrichtungen nach einem der vorhergehenden Ansprüche.

## Claims

1. Illumination apparatus, in particular for a motor vehicle, comprising a plurality of multicolour LED units (3) with respectively settable colour point and settable brightness, wherein each multicolour LED unit (3) is an individual semiconductor device with a plurality of single-colour LEDs (301, 302, 303, 304) of different colours and a microcontroller (4), **characterized in that** the single-colour LEDs (301, 302, 303, 304) and the microcontroller (4) of each multicolour LED unit (3) are enclosed by a corresponding package of the semiconductor device, wherein the microcontroller (4) is adapted to control each single-colour LED (301, 302, 303, 304) of a respective multicolour LED unit (3) in dependence on an instantaneous temperature value of the respective multicolour LED unit (3) in such a way that a set colour point and a set brightness are kept constant during the operation of the respective multicolour LED unit (3).

2. Illumination apparatus according to Claim 1, **characterized in that** the microcontroller (4) of at least some of the multicolour LED units (3) is adapted to control each single-colour LED (301, 302, 303, 304) on the basis of controlling the operating current of the respective single-colour LED (301, 302, 303 304).

3. Illumination apparatus according to Claim 1 or 2, **characterized in that** a temperature sensor (TS), which is adapted to measure the instantaneous temperature value of the respective multicolour LED unit (3), is integrated in the semiconductor device of at least some of the multicolour LED units (3).

4. Illumination apparatus according to one of the preceding claims, **characterized in that** the microcontroller (4) of at least some of the multicolour LED units (3) is adapted to ascertain the instantaneous temperature value on the basis of at least a portion of the operating voltages and/or operating currents of the single-colour LEDs (301, 302, 303, 304) of the respective multicolour LED unit (3).

5. Illumination apparatus according to Claim 4, **characterized in that** characteristics or tables are stored for a respective single-colour LED (301, 302, 303, 304) of at least some of the single-colour LEDs (301, 302, 303, 304) of the respective multicolour LED unit (3) in the microcontroller (4) of at least some of the multicolour LED units (3), wherein a respective characteristic or table is specific to an operating current of the respective single-colour LED (301, 302, 303, 304) and specifies a temperature in dependence on the operating voltage of the respective single-colour LED (301, 302, 303, 304), wherein the microcontroller (4) is adapted to read the temperature for the instantaneous operating voltage of the respective single-colour LED (301, 302, 303, 304) from the characteristic or table for the instantaneous operating current of the respective single-colour LED (301, 302, 303, 304) and to ascertain the instantaneous temperature value on the basis of the read temperature(s).

6. Illumination apparatus according to one of the preceding claims, **characterized in that** the microcontroller (4) of at least some of the multicolour LED units (3) is designed such that it reduces the brightness of the multicolour LED unit (6) if the instantaneous temperature value exceeds a prescribed threshold.

7. Illumination apparatus according to one of the preceding claims, **characterized in that** the illumination apparatus comprises a plurality of multicolour LED units (3) that are connected to an internal data bus (2) coupled to a processing module (1), wherein the processing module (1) is adapted to issue internal control commands for setting the brightness and the colour point of the individual multicolour LED units (3) to the internal data bus (2).

8. Illumination apparatus according to Claim 7, **characterized in that** the processing module (1) is adapted to receive external control commands from a motor vehicle data bus (6) and to convert them into the internal control commands.

9. Illumination apparatus according to one of the preceding claims, **characterized in that** at least some of the multicolour LED units (3) comprise one or more RGB-LED units and/or RGBW-LED units.

10. Illumination apparatus according to one of the preceding claims, **characterized in that** the illumination apparatus is an internal illumination apparatus for mounting in a motor vehicle or an exterior illumination apparatus for mounting on the outside of the motor vehicle.

11. Motor vehicle, comprising one or more illumination apparatuses according to one of the preceding claims.

## Revendications

1. Dispositif d'éclairage, en particulier pour un véhicule automobile, comprenant plusieurs unités à LED polychromes (3) respectivement avec une localisation chromatique réglable et une luminosité réglable, chaque unité à LED polychrome (3) étant un composant semiconducteur individuel avec plusieurs LED monochromes (301, 302, 303, 304) de couleurs différentes et un microcontrôleur (4), **caractérisé en ce que** les LED monochromes (301, 302, 303, 304) et le microcontrôleur (4) de chaque unité à LED polychrome (3) sont entourés d'un boîtier correspondant du composant semiconducteur, le microcontrôleur (4) étant aménagé pour piloter chaque LED monochrome (301, 302, 303, 304) de chaque unité à LED polychrome (3) respective en fonction d'une valeur de température actuelle de l'unité à LED polychrome (3) respective de telle sorte qu'une localisation chromatique réglée et une luminosité réglée sont maintenues constantes en cours de fonctionnement de l'unité à LED polychrome (3) respective.

2. Dispositif d'éclairage selon la revendication 1, **caractérisé en ce que** le microcontrôleur (4) au moins d'une partie des unités à LED polychromes (3) est aménagé pour piloter chaque LED monochrome (301, 302, 303, 304) sur la base de la commande du courant de service de la LED monochrome (301, 302, 303, 304) respective.

3. Dispositif d'éclairage selon la revendication 1 ou 2, **caractérisé en ce que** dans le composant semiconducteur au moins d'une partie des unités à LED polychromes (3), un capteur de température (TS) est intégré qui est aménagé pour mesurer la valeur de température actuelle de l'unité à LED polychrome (3) respective.

4. Dispositif d'éclairage selon l'une quelconque des revendications précédentes, **caractérisé en ce que** le microcontrôleur (4) au moins d'une partie des unités à LED polychromes (3) est aménagé pour déterminer la valeur de température actuelle sur la base au moins d'une partie des tensions de service et/ou des courants de service des LED monochromes (301, 302, 303, 304) de l'unité à LED polychrome (3) respective.

5. Dispositif d'éclairage selon la revendication 4, **caractérisé en ce que** dans le microcontrôleur (4) au moins d'une partie des unités à LED polychromes (3), des courbes caractéristiques ou des tables sont mémorisées pour une LED monochrome (301, 302, 303, 304) respective au moins d'une partie des LED monochromes (301, 302, 303, 304) de l'unité à LED polychrome (3) respective, dans lequel une courbe caractéristique ou table respective est spécifique pour un courant de service de la LED monochrome (301, 302, 303, 304) respective et spécifie une température en fonction de la tension de service de la LED monochrome (301, 302, 303, 304) respective, le microcontrôleur (4) étant aménagé pour lire à partir de la courbe caractéristique ou de la table pour le courant de service actuel de la LED monochrome respective LED (301, 302, 303, 304) la température pour la tension de service actuelle de la LED monochrome (301, 302, 303, 304) respective et pour déterminer la valeur de température actuelle sur la base de la ou des températures lues.

6. Dispositif d'éclairage selon l'une quelconque des revendications précédentes, **caractérisé en ce que** le microcontrôleur (4) au moins d'une partie des unités à LED polychromes (3) est configuré de telle sorte qu'il diminue la luminosité de l'unité à LED polychrome (6) au cas où la valeur de température actuelle dépasse un seuil prédéfini.

7. Dispositif d'éclairage selon l'une quelconque des revendications précédentes, **caractérisé en ce que** le dispositif d'éclairage comprend plusieurs unités à LED polychromes (3) qui sont connectées à un bus de données interne qui est couplé à un module de traitement (1), le module de traitement (1) étant aménagé pour fournir des ordres de commande internes afin de régler la luminosité et la localisation chromatique des unités à LED polychromes (3) individuelles sur le bus de données interne (2).

8. Dispositif d'éclairage selon la revendication 7, **caractérisé en ce que** le module de traitement (1) est aménagé pour recevoir des ordres de commande externes d'un bus de données de véhicule automobile (6) et pour les transformer en ordres de commande internes.

9. Dispositif d'éclairage selon l'une quelconque des revendications précédentes, **caractérisé en ce qu'**au moins une partie des unités à LED polychromes (3) comprend une ou plusieurs unités à LED RGB et/ou unités à LED RGBW.

10. Dispositif d'éclairage selon l'une quelconque des revendications précédentes, **caractérisé en ce que** le dispositif d'éclairage est un éclairage d'habitacle à fixer dans un véhicule automobile ou un éclairage extérieur à fixer sur la face extérieure du véhicule automobile.

11. Véhicule automobile, comprenant un ou plusieurs dispositifs d'éclairage selon l'une quelconque des revendications précédentes.
